# EUROPEAN PATENT APPLICATION

(11) **EP 1 971 034 A1**
(43) Date of publication of application: **17.09.2008**
(21) Application number: 08159579.5
(22) Date of filing: 13.02.2003
(51) Int. Cl.: H04B 1/16

(54) **System and method for efficiently detecting the identification of a received signal**

(30) Priority: 13.02.2002 US 357189 P; 13.02.2002 US 357199 P; 19.02.2002 US 357943 P
(62) Divisional of application: 03711035.0
(71) Applicant: INTERDIGITAL TECHNOLOGY CORPORATION, Wilmington, DE 19810 (US)
(72) Inventor: Dick, Stephen G., Nesconset, NY 11767 (US); Shin, Sung-Hyuk, Fort Lee, NJ 07024 (US); Bolourchi, Nader, Larchmont, NY 10538 (US)
(74) Representative: Loqvist, Gabriel Mathias

(57) **Abstract**

The present invention provides a method for receiving data in a wireless communication system having a plurality of communication channels. The method comprising the steps of receiving a message comprising an identifier associated with a wireless transmit/receive unit (WTRU) and determining whether the identifier matches an identification associated with the WTRU. In response to a positive determination, the method comprising the steps of processing information received with the message indicating one of the plurality of communication channels carrying communication data intended for the WTRU and selecting the indicated one of the plurality of communication channels to receive the communication data.

## Description

### FIELD OF INVENTION

The present invention relates to the field of wireless communications. More specifically, the present invention is directed to a system and method for efficiently identifying information on a particular control channel out of a plurality of control channels.

BACKGROUND

One of the goals in the design of wireless mobile units is the maximization of battery life. A substantially longer battery life tremendously increases the convenience for the user. A primary factor in limiting battery life is the processing required by a mobile unit. If the processing requirements are minimized, battery life is longer; whereas if the processing requirements are increased, battery life decreases. This is one of the tradeoffs in designing a wireless system: a system that performs better but has a reduced battery life versus a system that doesn't perform as well but has an extended battery life.

In wireless systems, one of the processes that consumes a large percentage of processing resources is the detection process. Accordingly, there is an incentive to design a highly efficient detection process that allows minimum processing resources during the preliminary detection phase, particularly in systems having shared channels. The preliminary detection phase occupies a majority of the detection process since this is the phase when the receiver continuously or intermittently monitors one or more channels to determine whether there is data destined for the mobile unit. If there is data destined for the mobile unit, one of the channels will have some type of indication or message that data is available. The data destined for the mobile unit may then be transmitted on that channel, or the indication may include the address of some other channel to which the mobile unit should tune to receive the data.

One solution for supporting data communications is the allocation of a dedicated channel to each wireless mobile unit. However, this results in an extremely inefficient use of the bandwidth since such channels often remain idle for long durations.

An alternative to using dedicated channels for each mobile unit is the use of shared data channels and the packeting of data. In this method, a plurality of channels are shared between a plurality of mobile units. Those mobile units having data for transmission or reception are dynamically assigned one of the shared data channels. This results in a much more efficient use of the spectrum.

Systems having shared channels often share a small number of channels, (such as 4-6 channels), among a large number of mobile units, (for example, up to 100 mobile units). Accordingly, although the mobile unit continuously or intermittently monitors one or more channels during the preliminary detection phase, in actuality, the indication or message is rarely for that particular mobile unit and a vast majority of the processing required during this time period is wasted on data that is not destined for that particular mobile unit. When there are multiple channels being monitored by a mobile unit, only one channel could have data destined for the particular mobile unit. However, most of the time none of the channels have data destined for a particular mobile unit. It would be desirable to have the mobile unit only perform a detailed search for data within the channel of interest, and consume a reduced amount of power and computing resources in doing so.

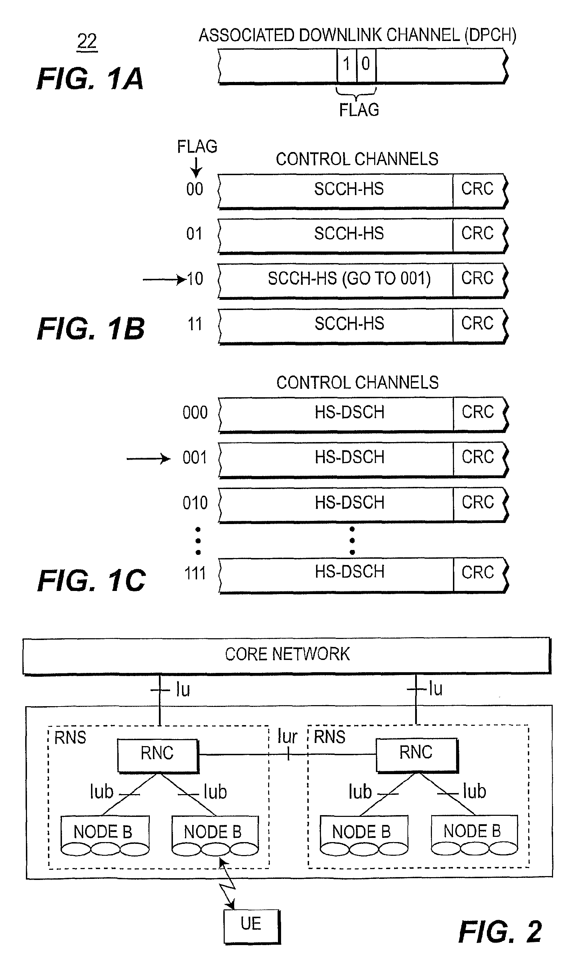

One specific example of such a communication system using a shared channel scheme is a Third Generation Partnership Project (3GPP) communication system. In a 3GPP system using the High Speed Data Packet Architecture (HSDPA) application, a mobile unit anticipates that data will be sent to it, but does not know exactly when or on which channel. This process is shown in Figures 1A-1C. Referring to Figure 1A, an associated downlink dedicated physical channel (DPCH) is transmitted from a base station (or Node B) to each mobile unit. The mobile unit monitors the DPCH as well as the shared control channels (HS-SCCH). When there is no data being transmitted to the mobile unit-from the base station, the mobile unit enters a standby mode whereby it periodically "wakes up" to attempt to monitor the DPCH as well as the HS-SCCHs. The standby mode permits the mobile unit to save processing and battery resources.

If data at the base station is ready for transmission to the mobile unit, a High Speed Downlink Shared Channel (HS-DSCH) flag is transmitted in the DPCH. The flag has an n-bit length, which points to one of the 2ⁿ HS-SCCHs shown in Fig. 1B. For example, a 2 bit flag can point to 4 SCCH-HSs, (i.e., 00, 01, 10 or 11).

For the example shown in Figure 1A, the flag is (1, 0) which points to the third channel shown in Figure 1B. When the mobile unit accesses the control channel identified by the flag, that particular HS-SCCH will direct the mobile unit to the proper HS-DSCH, which has been allocated to the mobile unit for reception of the data. As shown in Figure 1C, for example, the mobile unit tunes to the HS-DSCH (001) that was identified by HS-SCCH (1, 0). The mobile unit then receives the data intended for it over the HS-DSCH (001). It should be noted that the graphical representation of Figures 1A-1C has been presented to illustrate the process of assigning HS-DSCHs, and the configuration and use of channels may differ slightly from actual implementation in HSDPA standards.

Although the process as described with reference to Figures 1A-1C provides an efficient method for assigning common data channels for transmission of data, it requires the use of a separate dedicated control channel to transmit the flag, which is undesirable.

The aforementioned example can also be generalized and is applicable to other communication systems in which a plurality of channels are used to provide data intended for individual ones of multiple receivers.

Since the information destined for a particular mobile unit is typically contained in one particular control channel out of a plurality of control channels, it would be advantageous if a mobile unit could quickly determine the particular control channel to access for information destined to it.

SUMMARY

The present invention is a system and method that efficiently determine when a message is intended for a particular wireless transmit/receive unit (WTRU). In accordance with the present invention, each WTRU is configured to receive communications on multiple communication channels. Information may be obtained from a base station on at least one of the multiple communication channels. The WTRU receives and processes incoming signals on the multiple communication channels at the physical layer for an indication of which, if any, of the multiple communication channels is intended for the WTRU. If the indication is consistent with an expected indication for that mobile unit, the mobile unit accesses the particular communication channel and processes the information being sent therein.

In a particular configuration, the communication channels may be provided as control channels, and the analysis of the signals is sufficient to obtain a pattern which provides an indication of control information for the particular mobile unit.

BRIEF DESCRIPTION OF THE DRAWING(S)

Figure 1A is a block diagram showing the use of assigning shared downlink data channels.

Figure 1B is a block diagram which illustrates a plurality of control channels.

Figure 1C is a block diagram illustrating a plurality of data channels.

Figure 2 is a Universal Mobile Telecommunications System (UMTS) network architecture used in accordance with the present invention.

Figure 3 is a block diagram of a transmitter made in accordance with the present invention.

Figure 4 is a block diagram of a preamble generator.

Figure 5 is a block diagram of a receiver made in accordance with the present invention.

Figure 6 is a block diagram of a preamble processor.

Figure 7 is an alternative embodiment of a preamble generator using Reed-Muller encoding.

Figure 8 is an alternative embodiment of a preamble processor using Reed-Muller decoding.

Figure 9 is an alternative embodiment of a preamble processor made in accordance with the present invention.

DETAILED DESCRIPTION OF THE PREFERRED EMBODIMENT(S)

The present invention will be described with reference to the drawing figures wherein like numerals represent like elements throughout. It should be noted that although the present invention will be described with reference to a 3GPP system, the principals taught herein are applicable to any communication system having a plurality of communication channels wherein a receiver must detect information being sent to it on any one of the communication channels.

Referring to Figure 2, a Universal Mobile Telecommunications System (UMTS) network architecture used by the present invention includes a core network (CN), a UMTS Terrestrial Radio Access Network (UTRAN), and a wireless transmit/receive unit (WTRU). The two general interfaces are the Iu interface, between the UTRAN and the core network, as well as the radio interface Uu, between the UTRAN and the WTRU. The UTRAN consists of several Radio Network Subsystems (RNSs). They can be interconnected by the Iur interface. This interconnection allows core network independent procedures between different RNSs. The RNS is further divided into the Radio Network Controller (RNC) and several base stations (Node-B). The Node-Bs are connected to the RNC by the Iub interface. One Node-B can serve one or multiple cells, and typically serves a plurality of WTRUs. The UTRAN supports both FDD mode and TDD mode on the radio interface. For both modes, the same network architecture and the same protocols are used. Only the physical layer and the air interface Uu are specified separately.

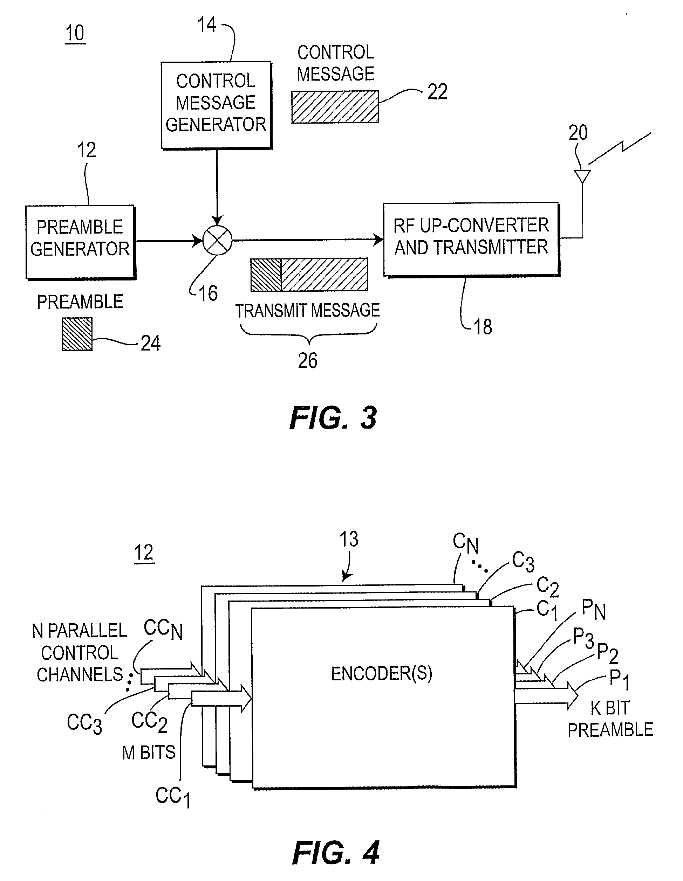

Referring to Figure 3, a transmitter 10 made in accordance with the present invention is shown. The transmitter 10 includes a preamble generator 12, a control message generator 14, a combiner 16, an RF upconverter and transmitter 18 and an antenna 20. The control message generator 14 generates an X-bit control message 22. Likewise, the preamble generator 12 generates a preamble 24. The preamble 24 and the control message 22 are combined in the combiner 16 to create a transmit message 26, having a preamble 24 which precedes the control message 22. The transmission message 26 is then upconverted and transmitted via the RF upconverter and transmitter 18 and radiated by the antenna 20.

Referring to Figure 4, the preamble generator 12 is shown in greater detail. The preamble generator 12 is able to process a plurality of parallel channels C1, C2, C3... CN. The preamble generator 12 accepts N parallel control channels CC1, CC2, CC3...CCN, each control channel CC1-CCN including a WTRU identification (WTRUID) comprising M bits. The preamble generator 12 performs encoding, via at least one encoder 13, by mapping an M-bit WTRUID into a K-bit preamble. As those of skill in the art would recognize, any of a large list of encoding schemes may be used for the present invention. For example, encoding schemes such as Reed-Muller, Reed-Solomon, Hamming, Bose-Chaudhura-Hocquenghem (DCH) and Golay may be used. Of course, other codes could be used which exhibit the superior qualities of the aforementioned codes. Such qualities are ease in implementation, and a large distance between any two code words. For example, for a block code, the Hamming distance between two words is the number of positions in which the words differ. A good code has a large value for its minimum Hamming distance.

A plurality of preambles P1, P2, P3...PN are generated from the at least one encoder 13 as a result of the encoding process. As aforementioned with reference to Figure 3, each of the preambles P1-PN is combined with a corresponding control message 22 to create a transmit message 26 for transmission.

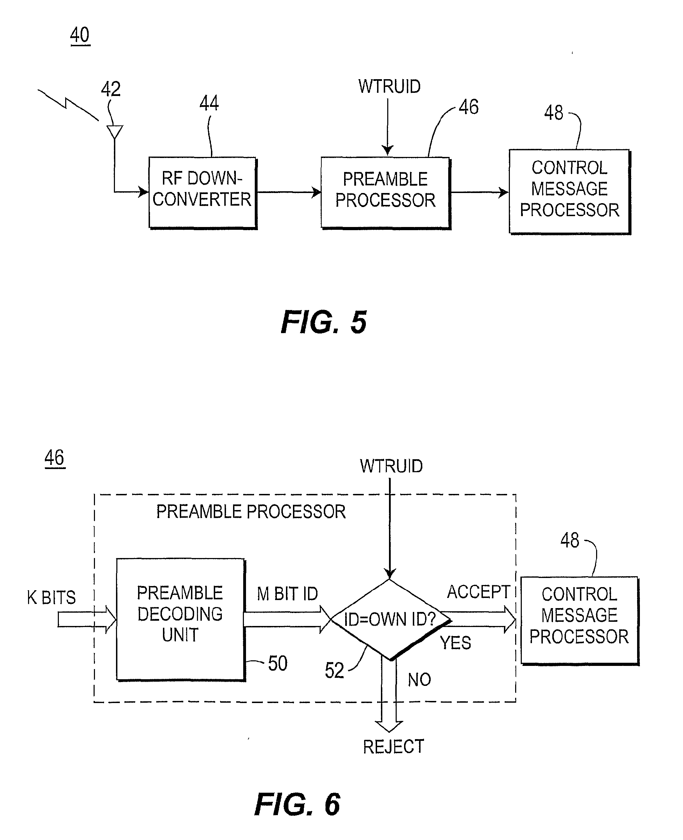

Referring to Figure 5, a receiver 40 in accordance with the present invention is shown. The receiver 40 includes an antenna 42, an RF downconverter 44, a preamble processor 46 and a control message processor 48. Once the transmit message 26 is received at the antenna 42, it is downconverted by the RF downconverter 44 and forwarded to the preamble processor 46. As will be described in greater detail hereinafter, the preamble processor 46 accepts the WTRUID of the particular WTRU and processes the plurality of preambles P1-PN to determine whether any of the preambles correspond to the WTRUID of that particular WTRU. Only a transmit message 26 having a preamble P1-PN which matches the WTRUID will be forwarded to the control message processor 48 for further processing of the control message 22.

Referring to Figure 6, the preamble processor 46 is shown in greater detail. The preamble processor 46 includes a preamble decoding unit 50 and a comparator 52. The preamble decoding unit 50 accepts the transmit message 26 including the preamble 24 and the control message 26 and decodes the preamble 24 into an M-bit identification (ID). In essence, the preamble decoding unit 50 performs a reverse process to the one performed by the preamble generator 12 shown in Figure 4. The M-bit ID is then compared with the WTRUID in the comparator 52. If there is no match, the preamble 24 and the control message 26 are not further processed. If there is a match, the preamble 24 is accepted and the control message 26 is forwarded to the control message processor 48 for further processing. It should be noted that although Figure 6 only shows a single channel for simplicity, the preamble processor 46 may actually process a plurality of channels C1-CN, as was shown and described with reference to the preamble generator 12 in Figure 4.

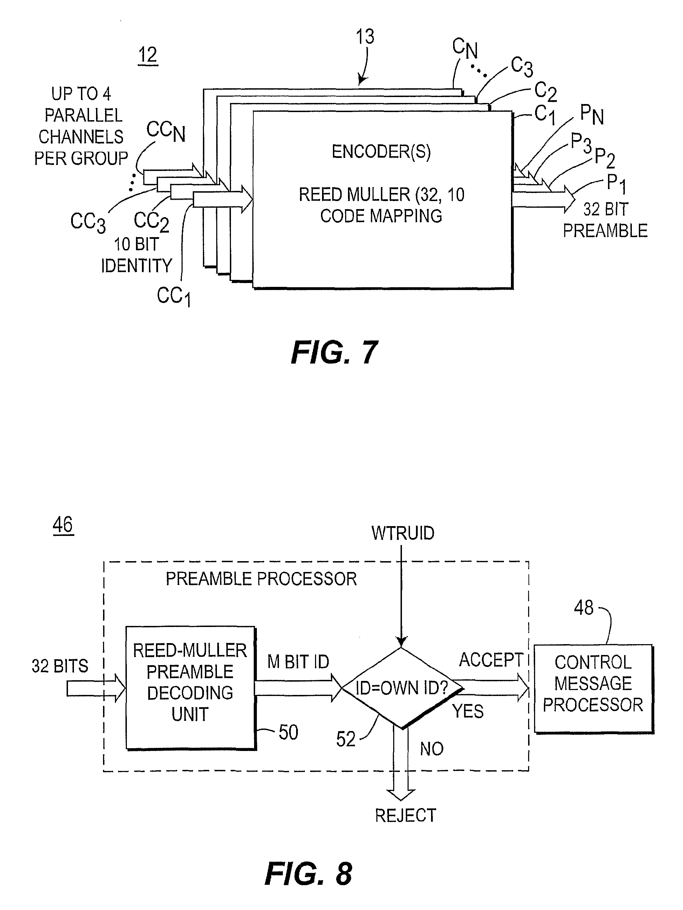

Although the present invention may be applied to any type of communication system using many different types of encoding process, a specific example with reference to a 3GPP system is shown in Figures 7 and 8.

Referring to Figure 7, code mapping is performed within each encoder 13 in the preamble generator 12. In this embodiment, this is accomplished with 10 bit WTRUIDs which are encoded into a 32-bit patterns using Reed-Muller encoding. Reed-Muller encoding is a known technique to enable an efficient and reliable method for transmitting up to 10 bits of control information. This pattern is then placed as a preamble to the control message 22 and the transmit message 26 is then transmitted. In this example, the WTRU is assigned four control channels to monitor, and the intended message may be sent on any one of them.

Referring to Figure 8, on the receive side, the preamble processor 46 includes a Reed-Muller preamble decoding unit 51 which essentially performs the reverse operation to the encoder 13 shown in Figure 7. The output of the Reed-Muller preamble decoding unit 51 is then similarly processed as was shown and described with reference to Figure 6 for the general application.

As would be known to those of skill in the art, there are many implementations possible with the decoding process and the present invention should not be limited to the several examples described herein. However, the present example of an M-bit ID represents 2^{M} ID possible hypotheses (e.g. in the present example, a 10-bit ID results in 2¹⁰ = 1024 hypotheses).

In a first embodiment of the present invention, the decoding process within the preamble decoding unit 51 correlates the received raw bits with the expected 32- bit pattern for each of the 1024 hypotheses and selects for each of the four (4) channels the hypothesis with the strongest correlation. These four (4) hypotheses are in turn, correlated in the comparator 52 with the 32 bit pattern associated with the WTRUID. The comparator 52 then accepts the channel with the best match.

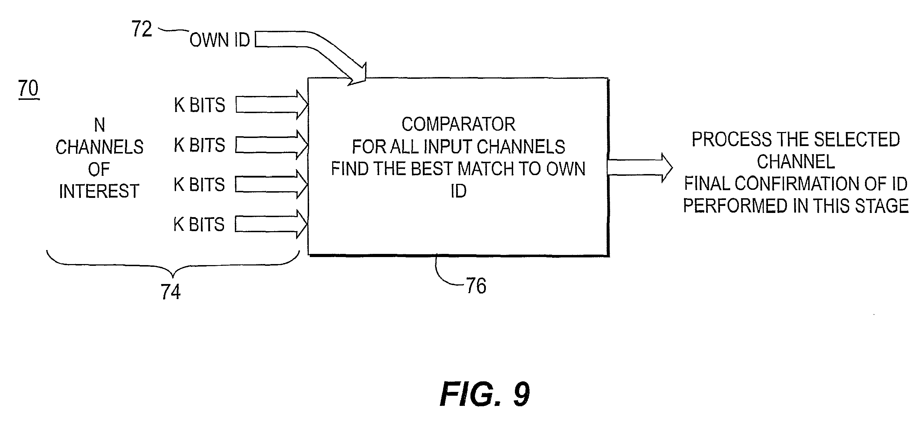

Referring to Figure 9 an alternative embodiment of a preamble processor 70 made in accordance with the present invention is shown in which detection is based on a "best match" to a particular WTRUID in a comparator 76. In this instance, a signal pattern 72 corresponding to the particular WTRUID (i.e., the WTRU's "own" ID) is used for comparison. As the N channels 74 are received at the physical layer, a comparison is made at the comparator 76. This comparison essentially comprises a matched filtering operation or a correlation. The incoming signal pattern which most closely correlates with the signal pattern 72 of the particular WTRUID is determined to be a "best match". This alternative provides a much higher probability of successful selection and also requires much less processing. In the example of 4 channels, this requires 4 correlations instead of 4 * 1024 correlations. This alternative provides an indication that information over one of the four (4) channels being received is addressed to the WTRU.

In an optional embodiment, the "best match" may be further subjected to a predetermined threshold, whereby only "best matches" that exceed the threshold are considered to be a match with the WTRUID.

The present invention may be further enhanced by using a general signature of the physical signal. Instead of processing each transmitted control message preamble to determine if one of them exactly matched its ID, the WTRU may make a determination of which of multiple transmissions most closely matches its ID. The WTRU then performs full processing of that one transmission. This is accomplished by determining which transmission most closely matches its ID and always performs full processing of that one. This greatly reduces the probability of a failure to detect its ID at the price of processing only one of the full control messages. This represents a significant savings over processing all control messages completely.

### LIST OF ITEMS

Item 1. In a system having a plurality of wireless transmit/receive units (WTRUs) which communicate with base station over a plurality of communication channels, a method for obtaining information from the base station on at least one of said plurality of communication channels; the method comprising:
receiving an RF signal; and
analyzing the RF signal at the physical layer to determine whether the pattern within the RF signal is similar to an expected pattern for a particular WTRU, and, if so, further processing the information transmitted with said RF signal for at least one of said plurality of communication channels.

Item 2. The method of item 1, further comprising:
using said analysis to obtain an indication of a particular one of said plurality of communication channels carrying communication data intended for the WTRU; and
selecting said particular communication channel.

Item 3. The method of item 2, further comprising using a signature of the RF signal in order to obtain said indication.

Item 4. A method of operating a wireless transmit/receive unit (WTRU), in which the WTRU monitors an RF signal for purposes of obtain a control message, the RF signal including a plurality of channels, with a control message being provided in at least one of said plurality of channels, the method comprising:
monitoring the RF signal at a physical level without fully parsing the plurality of channels; and
obtaining an indication of one of said control messages intended for the particular WTRU based on general characteristics of the RF signal at the physical layer.

Item 5. A wireless transmit/receive unit (WTRU) which communicates with a base station via a plurality of communication channels, the base station transmitting a plurality of messages, each message having an encoded preamble; the WTRU comprising:
a preamble processor, which processes the preamble at the physical layer to determine whether the preamble matches the identification (ID) of the WTRU; and
a control message processor, which processes the control message only if said determination is positive.

Item 6. The WTRU of item 5, whereby said preamble processor further includes a preamble decoding unit which decodes said preambles at the physical layer.

Item 7. The WTRU of Item 6, whereby said preamble processor further includes a comparator which compares said decoded preambles with said ID.

Item 8. The WTRU of item 5, whereby said preamble processor correlates each said preamble with said ID.

Item 9. The WRTU of item 8, whereby said preamble processor further determines which of said preambles is most highly correlated.

Item 10. The WTRU of item 9, whereby the preamble that is most highly correlated is further compared to a threshold, whereby it is determined that the ID of said WTRU is detected if said threshold is exceeded.

Item 11. The WTRU of item 5, wherein said preamble processor correlates the ID of said WTRU to each preamble and determines the preamble which is most highly correlated to the ID.

Item 12. In a system having a plurality wireless transmit/receive units (WTRUs) which communicate with a base station via a plurality of communication channels, the base station transmitting a plurality of messages, each message having an encoded preamble; the base station comprising:
a preamble generator, for generating a preamble having a unique identification at the physical layer;
a control message generator, for generating a control message;
a combiner for combining said preamble with said control message; and
an RF upconverter and transmitter for transmitting said combined message.

Item 13. The base station of item 12, whereby said preamble generator further includes an encoding unit which encodes said preambles at the physical layer with said unique identification.

Item 14. The base station of item 13, wherein said encoding comprises Reed-Muller encoding.

## Claims

1. A method for receiving data in a wireless communication system having a plurality of communication channels, the method comprising:
receiving a message comprising an identifier associated with a wireless transmit/receive unit (WTRU);
determining whether the identifier matches an identification associated with the WTRU;
in response to a positive determination, processing information received with the message indicating one of the plurality of communication channels carrying communication data intended for the WTRU; and
selecting the indicated one of the plurality of communication channels to receive the communication data.

2. The method of claim 1, wherein the message includes a plurality of identifiers, wherein each of the plurality of identifiers is associated with a different WTRU.

3. The method of claim 1, further comprising:
processing the communication data intended for the WTRU in accordance with the information received with the message.

4. A wireless transmit/receive unit (WTRU) for receiving data in a wireless communication network, the WTRU comprising:
a receiver configured to receive a message that includes an identifier;
a processor configured to determine whether the identifier included in the message matches an identification associated with the WTRU, and in response to a positive determination, to process information received with the message indicating one of a plurality of communication channels that carry communication data intended for the WTRU; and
a selector configured to select at least one of the plurality of communication channels based on the indication to receive the communication data.

5. The WTRU of claim 4, wherein the processor is further configured to process the communication data intended for the WTRU in accordance with the information received with the message.
